(19) Europäisches Patentamt / European Patent Office / Office européen des brevets

(11) **EP 3 056 984 A1**

(12) **EUROPEAN PATENT APPLICATION**

(43) Date of publication:
17.08.2016 Bulletin 2016/33

(51) Int Cl.:
**G06F 7/58** (2006.01)

(21) Application number: **15305204.8**

(22) Date of filing: **11.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
- **GEMALTO SA**
  **92190 Meudon (FR)**
- **ISSM**
  **13590 Meyreuil (FR)**

(72) Inventors:
- **Perion, Fabrice**
  **13881 Gemenos Cédex (FR)**

- **Villegas, Karine**
  **13881 Gemenos Cédex (FR)**
- **Perez Chamorro, Jorge Ernesto**
  **13881 Gemenos Cédex (FR)**
- **Coulon, Jean Roch**
  **13881 Gemenos Cédex (FR)**

(74) Representative: **Scheer, Luc et al**
  **Gemalto SA**
  **525, Avenue du Pic de Bertagne**
  **CS 12023**
  **13881 Gémenos Cedex (FR)**

(54) **METHOD TO GENERATE HIGH QUALITY RANDOM MASK FROM SMALL ENTROPY SOURCE**

(57) The present invention relates to a method to generate a mask (M) of a predefined size of b*m bits, said method comprising the following steps:
- generating a random number of a limited number p of bits,
- providing the p bits random number as the input of a deterministic random number generator (RNG) that outputs a random number of length m,
- applying to the output random number of length m an expansion function (EFM) using an error correcting code function to multiply the length by b and obtain a mask (M) of a size of b*m bits,
a reseeding function (RFM) being regularly applied to the random number generator (RNG).

FIG.1

EP 3 056 984 A1

**Description**

## FIELD OF THE INVENTION

The present invention relates to a method to generate a mask of a predefined size of b*m bits from a random number of a limited number of p bits output by a small source of entropy.

The invention also pertains to a device using said method.

## BACKGROUND OF THE INVENTION

The invention concerns embedded devices that have to manage masks of variable lengths and data in a secure way and thus for example avoid side channel leakage, memory dump, bus probing. More precisely the invention concerns devices having high constraint on power consumption, on silicon area and high constraints in terms of throughput with a level of one mask generation per clock cycle.

Alternatives exist to construct masks with good entropy but they are too costly in terms of power consumption and silicon area. For example, a solution is to set Linear Feedback Shift Register (LFSR) of target mask size but it is a very costly solution in term of silicon area and power consumption. Moreover it does not have good statistical properties in general. Another solution is to use physical true random generator, but this solution is too slow and too costly in most of situations.

Further alternatives and advantageous solutions would, accordingly, be desirable in the art.

## SUMMARY OF THE INVENTION

The present invention aims at producing several random masks with enough variability and with a reduced source of entropy, e.g. that the mask could be from 1 to several times greater than the entropy source output.

The present invention is defined, in its broadest sense, as a method to generate a mask of a predefined size of b*m bits, said method comprising the following steps:

- generating a random number of a limited number p of bits,
- providing the p bits random number as the input of a deterministic random number generator that outputs a random number of length m,
- applying to the output random number of length m an expansion function using an error correcting code function to multiply the length by b and obtain a mask of a size of b*m bits.

The invention proposes an efficient mechanism to use an entropy source of few bits and then expand it to the required masks length. The entropy source of about 1 bit per byte could be got from any generator available. Furthermore the mechanism of the invention allows implementations of all components to be optimized in order to have very small silicon area impact and very low power consumption implementations compared to the state of the art. Indeed the silicon area (number of gates) can be reduced compared to the existing solutions, i.e. ratio 8 to generate 64-bit mask.

The resulting hardware is very efficient. It comprises at least a small source of entropy of a few bits, e.g. 2 or 3, as input, an m-bit DRNG and an expansion function to b*m bits (b>=1).

The proposed configuration assures that the output has good statistical properties.

According to the invention, the random number generator is regularly reseeded. Such a reseeding function enables to make the entropy source to be efficient again as after a certain amount of time. The output would otherwise be deterministic. The reseeding function produces m/a bits as the entropy source itself (a>=1).

Also, if software wants to use the entropy source to generate a XOR software data mask, the result of XOR between the output and the software mask still have good statistical properties.

With the invention, the size of the space of possible masks infers the size of the RNG. The quality of the obtained masks is high. With the invention, a specific ratio of the expansion, i.e. the ratio of the mask size and the random number generator data size, is obtained. Customization is possible in terms of size of the needed masks only by modifying the expansion function. It is possible to reconstruct which bits correspond to the RNG and which to the expansion, from a topological point of view, typically using microscope observation. Thus with a single full mask it would be possible to figure out the type of expansion used but with the invention, it would not be possible to predict it. The quality of the masks is thus assured.

Encryption and decryption using the proposed method have no timing impact, they are executed "on the fly", i.e. during a single system clock cycle. This constitutes an important advantage since there are no time penalties on the utilization of such method. Also, it implies an important variability on time, i.e. from one cycle to the next, a completely different mask is used to encrypt/decrypt. The useful life of a mask is limited to a system clock cycle, it becomes useless the next cycle.

Thus the invention enables to have at each clock cycle a mask of variable length, these masks being compliant with high quality random tests, including FIPS. The use of the error correction code enables indeed to spread slight variations on the random number generator in order to diffuse the randomness on the constructed output. The error correcting codes used are assumed to be maximal in the sense of the Hamming code distance, which indicates that for a single bit variation on the input, the maximum theoretically possible number of bits on the output are flipped (from 0 to 1 and vice versa). In terms of the Hamming distance, this means that masks generated from close random numbers are actually far apart. This contributes by construction to the good statistical properties of the generated stream. The error correcting codes of interest do not need to be of any particular family but shall guarantee good minimum distance properties since this guarantees the maximal diffusion.

Advantageously, reseeding frequency is chosen depending on number m.

Such a reseeding frequency enables to have a non deterministic random number generated whatever is the length m.

In a particular embodiment, the reseed function is continuously applied.

Such an embodiment enables to insure a non deterministic random number to be generated whatever is the length m. It can however be too costly in terms of processing resources.

According to another particular embodiment, the reseed function is periodically applied.

Such a periodic reseed, ideally adapted depending on m, uses an average period insuring a non deterministic behavior.

According to a preferred embodiment, said expansion function F applies to the output random number of length m an optimal error correcting code of length n, of dimension m and of a given distance d to the output random number: $C(n,m,d)=F$, n and d being chosen depending at least on the chosen value b.

Such error correcting code having adapted parameters enables to reach the target of the invention by adapting the obtained length to the needs.

In a preferred embodiment, said error correcting code optimizes the distance d of the error correcting code to the output random number depending on the chosen value b.

Such an optimization enables to customize the error correcting code whatever is the required length of the mask.

According to a specific implementation, the number p is comprised in the interval [2, 8].

A small source of entropy producing such a small number of bits can be implemented in many devices having constrained resources.

Preferably, the number p is comprised in the interval [2, 4].

This implementation enables to takes the maximal advantage of the invention.

According to specific features, the expansion function further comprises arithmetic and/or Boolean operations.

Such operations come in addition with the application of the error correcting code which is the core of the invention.

The present invention also relates to a device comprising means to execute the method of the invention. The invention thus concerns a device intended to at least store or transfer data necessitating to be masked during these operations, said device comprising at least a storage, a communication channel and a mask application module, this device further having access to a small entropy source able to generate a random number of a limited number p of bits, to a deterministic random number of length m generator, to a computation module able to implement an expansion function using an error correcting code calculation multiplying the length by b to obtain a mask of a size of b*m bits.

To the accomplishment of the foregoing and related ends, one or more embodiments comprise the features hereinafter fully described and particularly pointed out in the claims.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 schematically represents the method of the invention and the structure of a random mask generator of the invention; and
- Figure 2 schematically shows a device of the invention.

## DETAILED DESCRIPTION OF EMBODIMENTS OF THE INVENTION

For a more complete understanding of the invention, the invention will now be described in details with reference to the accompanying drawings. In the different drawings, the same elements have been designated with the same reference numerals. For clarity, only those elements and steps which are useful to the understanding of the present invention have been shown in the drawings and will be described.

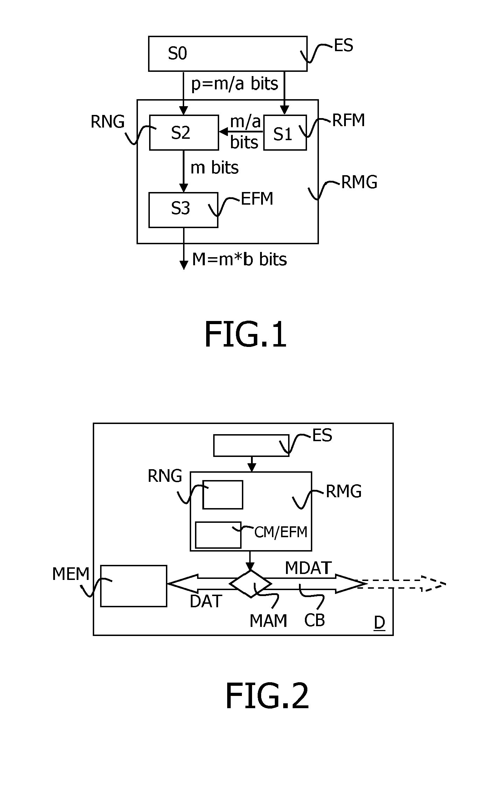

Figure 1 schematically illustrates the method of the invention. The method is based on the use of a small entropy source of a few p bits, thus producing a reduced number of random bits, typically p=4 bits. This figure also shows the structure of a random mask generator RMG of the invention. Such a random mask generator RMG comprises at least a random number generator RNG generating random number of length m from a m/a=p bits and an expansion function module EFM able to receive m bits and to apply error correction codes to these m bits to obtain a mask M of m*b bits.

The random mask generator RMG further includes a reseeding function module RFM intended to produce m/a bits regularly in order to reseed the random number generator RNG. This reseeding function module RFM is fed with the p=m/a bits as produced by the entropy source ES and produces alternative m/a bits.

The reseeding function module RFM takes the bits from the entropy source in order to continuously generate new seeds for the RNG on the next step. This seed re-generation is not only at start-up and regularly repeated. The reseeding function usually outputs the same number of bits as the entropy source. A heuristic rule is to use 1 bit per byte in the RNG.

The reseed function module RFM assigns a new seed to a previously created synchronizer. It serves to reset the underlying random number generator RNG to a non deterministic starting point given the user-specified seed and the sequence number of the upcoming stream. Regardless of the number of participating generation processes, the careful use of the reseed function module RFM will guarantee that each individual stream is initialized non deterministically and generated differently from run to run. The reseed function is therefore used to implement a multi-stream random number generator.

The choice of random streaming mechanism, i.e. the abstract reseed function, is critical in implementing the synthetic data generator of the invention.

The RNG usually has an m-bit state (e.g. 8 or 16 bits). It is continuously reseeded by the precedent function implying that it has a hybrid behavior and does not remain deterministic for a long period of time, e.g. only a few system clock cycles.

The expansion function produces an output with size of several times the state of the RNG (e.g. 64 or more bits) based on two factors: an extension of the RNG output by simple logic functions on the output bits and a maximal diffusion of the extension by means of optimal error correcting codes based on maximum/minimum distance issues.

According to the invention, the diffusion function applied on a data D, with $|D|$ = m bits, consists in applying an optimal code corrector C(n,m,d)=F of length n ($|F(D)|$ = n), dimension m and minimal distance d.

While referencing Dexp the result of the application of the error correcting code C(n,m,d)(D) (output of EFM), one can use Dexp if the length is as required or, to reach the length of the mask expected, if b*m is greater than n for example, one can duplicate Dexp, or concatenate its complement, or part of it to reach the expected mask length by concatenating these elements. Every one of the following lines represents an example:

$$Mask = Dexp$$

$$Mask = (Dexp\text{||} \text{ Part of } (Dexp))$$

$$Mask = Dexp \text{ || 2's complement}(Dexp)$$

$$Mask = Dexp + 2^n.(Dexp \text{ XOR } 0xFF...FFF)$$

And more generally, the mask can be defined as:

$$Mask = Dexp \text{ || } C(Dexp)$$

$$Mask = Dexp \text{ || } C(2\text{'s complement}(Dexp)), C \text{ being a function, preferably}$$

C being a function, preferably bijective.

Figure 2 schematically shows a device D of the invention. Such a device comprises a storage MEM to store data DAT, a communication bus CB to transfer data DAT from or to the storage MEM and a mask application module MAM (which is linked to the output of the EFM of figure 1) to apply masks to data having to be transferred on the communication bus CB to obtain masked data MDAT. This device has access to a random mask generator of figure 1. It thus comprises a random number generator RNG and a computation module CM to implement the expansion function EFM. Masks can be applied on data extracted from the storage or on data intended to be stored in the storage. Data can be originated or destined to any entity internal or external of the device.

In the above detailed description, reference is made to the accompanying drawings that show, by way of illustration, a specific embodiment in which the invention may be practiced. This embodiment is described in sufficient details to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

**Claims**

1. Method to generate a mask (M) of a predefined size of b*m bits, said method comprising the following steps:

   - generating a random number of a limited number p of bits,
   - providing the p bits random number as the input of a deterministic random number generator (RNG) that outputs a random number of length m,
   - applying to the output random number of length m an expansion function (EFM) using an error correcting code function to multiply the length by b and obtain a mask (M) of a size of b*m bits,

   a reseeding function (RFM) being regularly applied to the random number generator (RNG).

2. Method according to claim 1, wherein reseeding frequency is chosen depending on number m.

3. Method according to claim 1, wherein the reseeding function (RFM) is continuously applied.

4. Method according to claim 1, wherein the reseeding function (RFM) is periodically applied.

5. Method according to one of preceding claims, wherein said expansion function (EFM) applies to the output random number of length m an optimal error correcting code of length n, of dimension m and of a given distance d to the output random number: C(n,m,d)=F, n and d being chosen depending at least on the chosen value b.

6. Method according to claim 5, wherein said error correcting code optimizes the distance d of the error correcting code to the output random number depending on the chosen value b.

7. Method according to claim 7, wherein the number p is comprised in the interval [2, 8].

8. Method according to claim 8, wherein the number p is comprised in the interval [2, 4].

9. Method according to one of the preceding claims, wherein the expansion function (EFM) further comprises arithmetic operations.

10. Method according to one of the preceding claims, wherein the expansion function (EFM) further comprises Boolean operations.

11. Device (D) intended to at least store or transfer data (DAT) necessitating to be masked during these operations, said device (D) comprising at least a storage (MEM), a communication channel (CB) and a mask application module (MAM), this device (D) further having access to a small entropy source (ES) able to generate a random number of a limited number p of bits, to a deterministic random number of length m generator (RNG), to a computation module (CM) able to implement an expansion function (EFM) using an error correcting code calculation multiplying the length by b to obtain a mask of a size of b*m bits.

S0 — ES

p=m/a bits

RNG — S2 ← m/a bits — S1 — RFM

RMG

m bits

S3 — EFM

M=m*b bits

# FIG.1

ES

RNG — RMG

CM/EFM

MEM — MDAT

DAT — MAM CB — D

# FIG.2

Europäisches
Patentamt

European
Patent Office

Office européen
des brevets

**EUROPEAN SEARCH REPORT**

Application Number

EP 15 30 5204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/089656 A1 (TANAMOTO TETSUFUMI [JP] ET AL) 12 April 2012 (2012-04-12) * paragraphs [0008], [0041]; figure 1 * ----- | 1-11 | INV. G06F7/58 |
| X | BERK SUNAR ET AL: "A Provably Secure True Random Number Generator with Built-In Tolerance to Active Attacks", IEEE TRANSACTIONS ON COMPUTERS, IEEE SERVICE CENTER, LOS ALAMITOS, CA, US, vol. 55, no. 1, 1 January 2007 (2007-01-01), pages 109-119, XP011151231, ISSN: 0018-9340 * section 1, 7 * ----- | 1-11 | |

TECHNICAL FIELDS
SEARCHED    (IPC)

G06F

The present search report has been drawn up for all claims

| Place of search | Date of completion of the search | Examiner |
|---|---|---|
| Munich | 13 August 2015 | Prins, Leendert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                              

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 30 5204

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2015

| Patent document cited in search report | Publication date | Patent family member(s) | Publication date |
|---|---|---|---|
| US 2012089656 A1 | 12-04-2012 | JP 5433686 B2 | 05-03-2014 |
| | | US 2012089656 A1 | 12-04-2012 |
| | | WO 2010134197 A1 | 25-11-2010 |

EPO FORM P0459

For more details about this annex : see Official Journal of the European Patent Office, No. 12/82